(19) Europäisches Patentamt

European Patent Office

Office européen des brevets

(11) **EP 1 438 518 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: 02785272.2

(22) Anmeldetag: **22.10.2002**

(51) Int Cl.⁷: $F16D\ 65/21$, $F16D\ 66/00$

(86) Internationale Anmeldenummer:
**PCT/EP2002/011800**

(87) Internationale Veröffentlichungsnummer:
**WO 2003/036121 (01.05.2003 Gazette 2003/18)**

(54) **SELBSTVERSTÄRKENDE ELEKTROMECHANISCHE SCHEIBENBREMSE MIT REIBMOMENTERMITTLUNG**

SELF-ENERGIZING ELECTROMECHANICAL DISK BRAKE WITH DETECTION OF MOMENT OF FRICTION

FREIN A DISQUE ELECTROMECANIQUE A AUTORENFORCEMENT ET SAISIE DES MOMENTS DE FROTTEMENT

(84) Benannte Vertragsstaaten:
**AT BE BG CH CY CZ DE DK EE ES FI FR GB GR IE IT LI LU MC NL PT SE SK TR**

(30) Priorität: **22.10.2001 DE 10151950**

(43) Veröffentlichungstag der Anmeldung:
**21.07.2004 Patentblatt 2004/30**

(73) Patentinhaber: **Estop GmbH**
**82284 Grafrath (DE)**

(72) Erfinder:
• **SCHAUTT, Martin**
 **80333 München (DE)**
• **PASCUCCI, Antonio**
 **80337 München (DE)**
• **HARTMANN, Henry**
 **82229 Seefeld (DE)**

(74) Vertreter: **Beyer, Andreas, Dr.**
**Wuesthoff & Wuesthoff,**
**Patent- und Rechtsanwälte,**
**Schweigerstrasse 2**
**81541 München (DE)**

(56) Entgegenhaltungen:
EP-A- 1 124 073    WO-A-98/14715
WO-A-02/095255    WO-A-02/095257
DE-A- 19 819 564    US-A- 4 016 755

## Beschreibung

Die Erfindung betrifft selbstverstärkende elektromechanische Scheibenbremsen, insbesondere für Kraftfahrzeuge. Bei solchen Scheibenbremsen bringt ein elektrischer Aktuator eine Betätigungskraft auf, die die Reibbeläge der Bremse an die sich drehende Bremsscheibe anlegt. Eine Selbstverstärkungseinrichtung in Gestalt einer Keilanordnung nutzt die in der sich drehenden Bremsscheibe enthaltene kinetische Energie zum weiteren Zustellen der Reibbeläge, d.h. die Reibbeläge werden mit einer gegenüber der Aktuatorkraft deutlich erhöhten Kraft, die nicht von dem elektrischen Aktuator aufgebracht wird, gegen die Bremsscheibe gepresst. Das Grundprinzip einer solchen Bremse ist aus dem deutschen Patent 198 19 564 bekannt.

Um für einen Einsatz insbesondere in Kraftfahrzeugen geeignet zu sein, müssen elektromechanische Bremsen eine Regelung aufweisen, die sicherstellt, daß bei einer normalen Bremsung beide Bremsen einer Fahrzeugachse gleich stark bremsen. Ist dies nicht der Fall, kommt es zum sogenannten 'Schiefziehen' des Fahrzeuges, was aus Sicherheitsgründen unbedingt vermieden werden muß. Auch darf es nicht dazu kommen, daß die Bremse in einer für den Fahrzeugführer nicht vorhersehbaren Weise plötzlich viel stärker oder schwächer bremst als es dem Verzögerungswunsch des Fahrzeugführers entspricht. Zu einer Änderung des Verzögerungsverhaltens einer Bremse kann es insbesondere durch einen sich ändernden Reibkoeffizient kommen, dessen Wert stark von beispielsweise der Temperatur und der Oberflächenbeschaffenheit der Reibflächen abhängt. Besonders bei selbstverstärkenden elektromechanischen Bremsen, die einen hohen Selbstverstärkungsfaktor aufweisen können, ist eine gute Regelung von großer Bedeutung, da der Bremsenkennwert C*, der das Verhältnis von aufgebrachter Aktuatorkraft zu tatsächlich erzeugter Reibkraft angibt, sehr stark vom Reibkoeffizienten abhängt. Üblicherweise wird versucht, das aktuell vorliegende Reibmoment durch eine Messung der Reibkraft zu ermitteln. Die Reibkraft lässt sich beispielsweise mit einem Sensor messen, der zwischen einem Reibbelag der Bremse und einem Bauteil angeordnet ist, an dem sich der Reibbelag beim Bremsen abstützt. Aus der Beziehung

$$M_R = F_R \cdot r_{disc}$$

mit

$M_R$ =     Reibmoment
$F_R$ =     Reibkraft
$r_{disc}$ =     Radius der Bremsscheibe

ergibt sich dann ohne weiteres das Reibmoment.

Die Messung der Reibkraft ist allerdings mit vielen Störgrößen behaftet, die sich beispielsweise aus schnellen Auf- und Abbewegungen der Bremse im Fahrbetrieb ergeben, welche durch Fahrbahnunebenheiten hervorgerufen werden. Fahrbahnunebenheiten können an der Radbremse eines Kraftfahrzeuges Beschleunigungen bis zum 20-fachen Wert der Erdbeschleunigung verursachen. Die Massenträgheitskräfte, die durch solche Stöße hervorgerufen werden, erzeugen beträchtliche Störungen des Reibkraftmeßsignals. Um ein aussagekräftiges Messergebnis zu erhalten, ist eine Filterung des vom Reibkraftsensor gelieferten Signales unabdingbar. Diese elektronische Filterung des Meßsignals verzögert allerdings die Bestimmung der Reibkraft und führt zu einem relativ trägen Verhalten des gesamten Reibmomentregelkreises.

Aus der WO-A-9 814 715 ist eine Selbstverstärkende elektromechanische Scheibenbremse gemäss dem Gattungsbegriff, bekannt.

Der Erfindung liegt die Aufgabe zugrunde, eine selbstverstärkende elektromechanische Scheibenbremse der eingangs genannten Art, bei der die Aktuatorkraft nicht gleich der Normalkraft und in aller Regel nicht normal zur Bremsscheibe gerichtet ist, bereitzustellen, bei der die zuvor genannten Probleme beseitigt sind, bei der also insbesondere die Regelungsdynamik deutlich verbessert ist.

Diese Aufgabe ist erfindungsgemäß durch eine selbstverstärkende elektromechanische Scheibenbremse gelöst, die die im Patentanspruch 1 oder im Patentanspruch 3 angegebenen Merkmale aufweist.

Gemäß einer ersten Lösung hat somit die erfindungsgemäße Scheibenbremse eine Einrichtung zur Ermittlung des Reibmomentes, die erste Mittel zur Messung der Reibkraft und zweite Mittel zur Bestimmung der zwischen der Bremsscheibe und dem Reibbelag wirkenden Normalkraft umfaßt. Gemäß einer Ausführungsform wird die Reibkraft durch einen Sensor gemessen, der die bei einer Bremsung auftretende Abstützkraft der Scheibenbremse erfasst. Der Sensor, z. B. ein Dehnungsmeßstreifen, kann beispielsweise so angeordnet sein, wie es eingangs bereits beschrieben worden ist. Der Sensor kann aber auch an jeder anderen Stelle angebracht sein, die es erlaubt, die bei einer Bremsung auftretende Abstützkraft zu erfassen.

Im Gegensatz zum herkömmlichen Vorgehen, lediglich die bei einer Bremsung auftretende Reibkraft zu messen, wird erfindungsgemäß zusätzlich die zwischen der Bremsscheibe und dem Reibbelag wirkende, normal zur Bremsscheibe gerichtete Kraft ermittelt. Im Gegensatz zur Reibkraftmessung, die wie beschrieben mit vielen Störgrößen behaftet ist und deshalb eine aufwendige und damit zeitraubende Filterung erfordert, ist die normal zur Bremsscheibe und damit parallel zur Radachse gerichtete Kraft kaum Störgrößen ausgesetzt, denn sie verläuft rechtwinklig zu den vertikalen Hauptanregungen, wie sie z.B. beim Überfahren einer Unebenheit mit hoher Geschwindigkeit und dem sich daraus ergebenden starken Einfedern eines Rades auftreten. Die Normalkraft braucht daher nicht zeitaufwendig gefiltert zu werden, sondern kann mit hoher Dynamik, d.h. sehr zeitnah ermittelt werden. Erfindungsgemäß wird also die Information über das aktuell vorliegende Reibmoment aus der Normalkraft gewonnen und mit dem Ergebnis der Reibkraftmessung verglichen, um Änderungen des Reibkoeffizienten, die sich aus der Normalkraft nicht ermitteln lassen, feststellen zu können. Gezielte Änderungen des Reibmomentes, wie sie beispielsweise Regelvorgänge von Bremsschlupfregelsystemen, Traktionskontrollsystemen und Fahrstabilitätssystemen in Kraftfahrzeugen auslösen, können erfindungsgemäß schneller und exakter ausgeführt werden. Dies ist von Vorteil, da die genannten Systeme umso besser funktionieren, je schneller der vom System geforderte Bremseingriff erfolgt.

Gemäß einer zweiten Lösung weist die Einrichtung zur Ermittlung des Reibmomentes der erfindungsgemäßen Scheibenbremse erste Mittel zur Bestimmung der Aktuatorkraft und zweite Mittel zur Bestimmung der zwischen der Bremsscheibe und dem Reibbelag wirkenden Normalkraft auf. Ebenso wie bei der ersten Lösung wird demnach auch hier die normal zur Bremsscheibe gerichtete Kraft ermittelt, um die Regelungsdynamik und damit die Gesamtqualität der Bremsregelung zu verbessern. Statt der stark störgrößenbehafteten Messung der Reibkraft wird jedoch bei der zweiten Lösung die während einer Bremsung aufgebrachte Aktuatorkraft bestimmt. Dies ermöglicht einen kompakteren Aufbau der Bremse, weil kein entfernter, beispielsweise am Bremsträger angebrachter Sensor zur Reibkraftmessung mehr erforderlich ist. Das Reibmoment wird indirekt bestimmt, ohne daß die Reibkraft direkt gemessen werden muß. Aus der Beziehung

$$F_R = \mu \cdot F_N = \mu \cdot \left( \frac{1}{\tan \alpha - \mu} \right) F_A$$

mit

$F_R$ = Reibkraft
$\mu$ = Reibkoeffizient
$F_N$ = Normalkraft
$F_A$ = Aktuatorkraft
$\alpha$ = Keilwinkel

ergibt sich

$$F_N = \left( \frac{1}{\tan \alpha - \mu} \right) F_A$$

und

$$\mu = \tan \alpha - \frac{F_A}{F_N}$$

Aus dem Verhältnis der Aktuatorkraft $F_A$ zur Normalkraft $F_N$ kann also der Reibkoeffizient $\mu$ errechnet werden, denn der Keilwinkel $\alpha$ ist eine vorgegebene und damit bekannte geometrische Größe der Bremse. Mit dem wirksamen Bremsscheibenradius $r_{disc}$, einer ebenfalls bekannten geometrischen Größe, erhält man dann mit $F_R = \mu \cdot F_N$ das gesuchte Reibmoment $M_R$ aus der Beziehung

$$M_R = F_R \cdot r_{disc} = (\tan \alpha \cdot F_N - F_A) \cdot r_{disc}.$$

Das Reibmoment kann somit aus der Kenntnis der Normalkraft $F_N$ und der Aktuatorkraft $F_A$ ermittelt werden. Zu erwähnen ist, daß die Beziehung $F_R = \mu \cdot F_N$ für eine Schwimmsattelscheibenbremse zu $F_R = 2\mu \cdot F_N$ wird.

Die Aktuatorkraft kann direkt gemessen werden, vorzugsweise mit einem im Kraftfluß der Aktuatorkraft angeordneten Kraftsensor, der beispielsweise ein Dehnungsmeßstreifen sein kann. Der Kraftsensor kann z.B. die Reaktionskraft erfassen, mit der sich ein dem Aktuator zugehöriger Elektromotor am Gehäuse des Aktuators bzw. der Bremse abstützt. Die Reaktionskraft entspricht bis auf das Vorzeichen der Aktuatorkraft. Der Kraftsensor kann aber auch an der Stelle angeordnet sein, an der die Aktuatorkraft in den Keil der Keilanordnung eingeleitet wird. Ebenso kann ein Kraftsensor in oder an einem Kraftübertragungsmittel des Aktuators angeordnet sein, beispielsweise an einer Spindel oder einer Zug- bzw. Druckstange.

Die Aktuatorkraft muß aber nicht direkt gemessen werden, sondern kann indirekt ermittelt werden, beispielsweise aus dem Motorstrom des dem Aktuator zugehörigen Elektromotors. Der Motorstrom ist ein Maß für das vom Motor abgegebene Drehmoment, welches beispielsweise durch einen Spindeltrieb in eine Axialkraft gewandelt wird. Der Motorstrom ist deshalb proportional zur erzeugten Aktuatorkraft. Bei nicht zu hohen Genauigkeitsanforderungen ist eine solche indirekte Ermittlung der Aktuatorkraft eine geeignete und günstige Lösung.

Bei beiden oben beschriebenen Lösungen kann die normal zur Bremsscheibe gerichtete Kraft mittels eines im Kraftfluß der Normalkraft angeordneten Kraftsensors gemessen werden. Beispielsweise kann die Messung der Normalkraft in den Reibbelägen selbst oder in bzw. an den Belagträgern erfolgen, ferner an den Abstützflächen des Keils der Keilanordnung, oder im die Bremsscheibe übergreifenden Sattel, oder auch im Rahmen der Scheibenbremse. Generell ist eine Messung von Kräften nahe am Entstehungsort vorteilhaft, um eine Verfälschung der Meßsignale durch träge Massen zu vermeiden.

Die Normalkraft kann jedoch auch indirekt bestimmt werden, z.B. aus dem Maß der bei einer gegebenen Bremsung erfolgenden Verschiebung des Keils der Keilanordnung. Bei einem Bremsvorgang führt die Normalkraft zu einer Aufweitung des Sattels der Scheibenbremse und zu einer Kompression der Reibbeläge und, in geringerem Umfang, auch der Bremsscheibe. Diese Elastizitäten der Bremse werden durch eine entsprechende Verschiebung des Keils in Betätigungsrichtung ausgeglichen. Bezeichnet man mit dem Begriff "Null-Lage" diejenige Stellung der Reibbeläge, bei der das sogenannte Lüftspiel gerade überwunden ist, die Reibbeläge somit kraftfrei an der Bremsscheibe anliegen, dann kann aus dem Maß der Verschiebung des Keils in Betätigungsrichtung direkt die Normalkraft berechnet werden. Ist die Federkennlinie des Systems Bremse linear, dann ist die Normalkraft direkt proportional zum Verschiebeweg des Keils.

Der Verschiebeweg des Keils kann entweder direkt gemessen werden, oder er kann aus Betriebsdaten des Aktuators ermittelt werden. Beispielsweise ist es möglich, aus dem Motordrehwinkel eines dem Aktuator zugehörigen Elektromotors den Verschiebeweg des Keils zu berechnen, jedenfalls dann, wenn der Elektromotor über ein steigungstreues Vorschubsystem auf den Keil einwirkt.

Alternativ und/oder zusätzlich kann die Aufweitung des Bremssattels mit einem handelsüblichen Positionsmeßsystem ermittelt werden. Da der Zusammenhang zwischen der Aufweitung des Bremssattels in Abhängigkeit der wirkenden Normalkraft für praktische Zwecke linear ist, stellt die Messung der Aufweitung des Bremssattels eine weitere Möglichkeit dar, die Normalkraft zu ermitteln.

Generell ist erfindungsgemäß die Normalkraft eine Hilfsgröße, deren Ermittlung dazu dient, die Dynamik der Regelung zu verbessern, da die direkte Messung des Reibmomentes aufgrund der erforderlichen Störgrößenfilterung nicht ausreichend schnell erfolgen kann. Mit anderen Worten, der aktuelle Wert des Reibmomentes steht erst mit einer gewissen Verzögerung zur Verfügung, d.h. zu einem Zeitpunkt $t_n$ gibt es einen gefilterten Meßwert, der den realen Wert zu einem Zeitpunkt $t_{n-m}$ wiederspiegelt, welcher zeitlich vor dem Zeitpunkt $t_n$ liegt. Dabei gibt m die Zahl der Zeitschritte an, um die das gemessene Signal durch die Filterung verzögert wird.

Die an sich mögliche hochdynamische Betätigung einer elektromechanischen Bremse erfordert, wenn die Vorteile einer solchen hochdynamischen Betätigung ausgenutzt werden sollen, eine entsprechend hochdynamische Regelung, welche mittels der Reibkraftmessung aus den bereits eingangs dargelegten Gründen nicht möglich ist. Die Ermittlung der als Hilfsgröße fungierenden Normalkraft hingegen kann sehr schnell und genau erfolgen, beispielsweise wie schon erwähnt durch eine Messung der Position des Keils. Die Position des Keils ist, sofern die Reibbeläge an der Bremsscheibe anliegen, proportional zur Aufweitung des Bremssattels und damit zur Normalkraft $F_N$. Über den Reibkoeffizient µ (für eine Schwimmsattelbremse gilt $F_R = 2 \cdot \mu \cdot F_N$) besteht auch eine Proportionalität zur Reibkraft $F_R$ und damit zum Reibmoment $M_R$ gemäß der

Beziehung

$$\Delta M_R = k \cdot \Delta x$$

mit

$\Delta M_R$ = Änderung des Reibmomentes
$x$ = Keilposition
$\Delta x$ = Keilverschiebung
$k$ = Proportionalitätsfaktor

Der Proportionalitätsfaktor k ist von einer Reihe von Parametern abhängig, z.B. vom Reibkoeffizient µ, vom wirksamen Reibradius, von der durch Verschleiß abnehmenden Reibbelagdicke, von der Federkonstante des Bremssattels und des Reibbelages bzw. der Reibbeläge und dadurch auch von der Temperatur der Bremsenbauteile. Obwohl der Proportionalitätsfaktor k demnach nicht konstant ist, ändert sich sein Wert lediglich mit einer Dynamik, die um Größenordnungen geringer ist als die durch Fahrbahnunebenheiten in die Bremse eingeleiteten Störungen. Mathematisch läßt sich dieser Sachverhalt wie folgt ausdrücken:

$$\dot{M}_R \gg \dot{k} \text{ und } \dot{x} \gg \dot{k}$$

Deshalb ist ein aus zurückliegenden Messungen von $M_R$ und x ermittelte Wert von k auch für die Gegenwart gültig. Der aktuelle Wert des Reibmomentes berechnet sich dann zu

$$M_R(t_n) = M_R(t_{n-m}) + k(t_{n-m}) \cdot [x(t_n) - x(t_{n-m})]$$

mit

$t_n$ = aktueller Zeitpunkt
$M_R(t_n)$ = gesuchtes Reibmoment zum Zeitpunkt $t_n$
$M_R(t_{n-m})$ = Reibmoment zum Zeitpunkt $t_{n-m}$, das zum Zeitpunkt $t_n$ den aktuellsten störgrößengefilterten Meßwert darstellt
$x(t_n)$ = Keilposition zum Zeitpunkt $t_n$
$k$ = Proportionalitätsfaktor (abhängig von Reibkoeffizient, Temperaturdehnung der Bremsenbauteile, Reibbelagabnutzung etc.)

Soll im Betrieb der Bremse, ausgelöst z.B. durch einen ABS-Regelungsvorgang, das Reibmoment der Bremse um einen bestimmten Betrag reduziert werden, kann die Regelung auf der Grundlage der vorstehenden Beziehung die erforderliche neue Keilposition berechnen und mittels des Aktuators sehr schnell einstellen. Eine Überprüfung des tatsächlichen Reibmomentes erfolgt dann durch die Reibkraftmessung.

Die sich im Betrieb der Bremse einstellende Abnutzung der Reibbeläge führt zu einer Veränderung der Null-Lage. Die Null-Lage muß daher gegebenenfalls durch die Regelung der Bremse immer wieder neu detektiert werden. Eine einfache Möglichkeit zur Bestimmung der Null-Lage bietet die Reibkraftmessung. Die Reibkraft steigt nämlich in dem Moment sprunghaft an, in dem der Reibbelag die Bremsscheibe berührt. Somit läßt sich die Keilposition, bei der der Reibbelag und die Bremsscheibe miteinander in Kontakt kommen, einfach detektieren. Zudem wird dann nur die relative Keilposition benötigt, womit sich eine bei fortschreitender Abnutzung des Reibbelages bzw. der Reibbeläge immer wieder durchzuführende Nullpunktskalibrierung erübrigt. Falls sich durch die zunehmende Abnutzung der Reibbeläge auch die Federkennlinie des Gesamtsystems Bremse verändert, kann diesem Umstand durch eine entsprechende Modellierung Rechnung getragen werden.

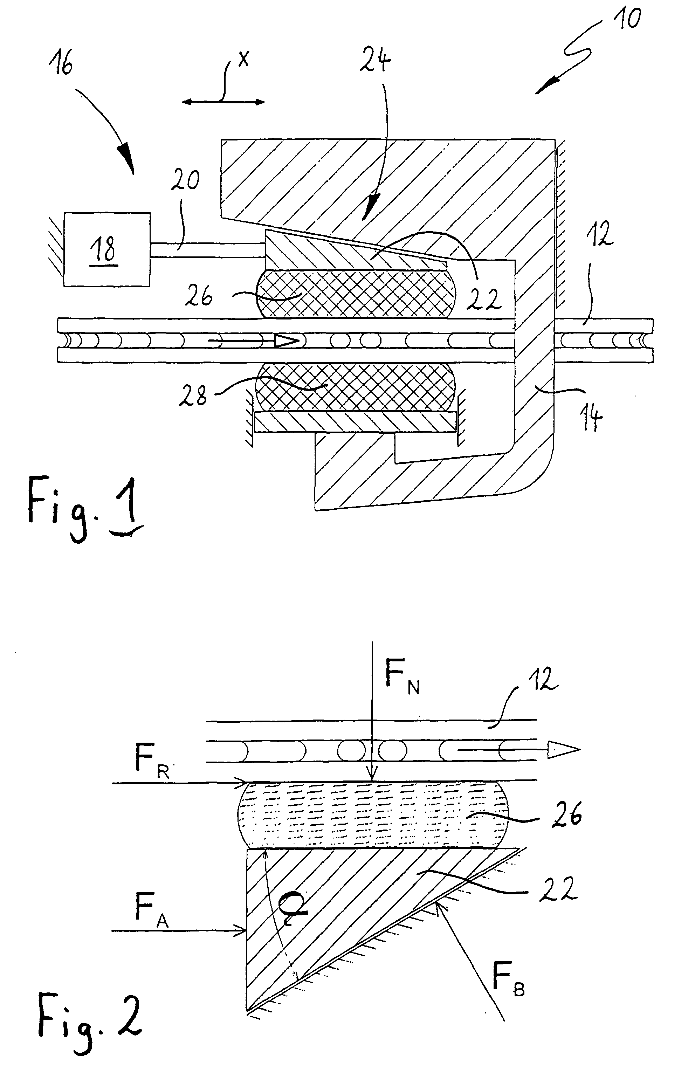

In der beigefügten Figur 1 ist sehr schematisch eine erfindungsgemäße selbstverstärkende elektromechanische Scheibenbremse 10 dargestellt. Die Scheibenbremse 10 hat eine drehbare Bremsscheibe 12, die von einem Bremssattel 14 übergriffen wird. Ein elektrischer Aktuator 16, der einen Elektromotor 18 und einen Spindeltrieb 20 umfaßt, erzeugt eine Betätigungs- oder Aktuatorkraft $F_A$, die über den Spindeltrieb 20 in einen Keil 22 einer Keilanordnung 24 eingeleitet wird, um den Keil 22 längs einer Richtung x zu verschieben und dadurch einen Reibbelag 26 an die Bremsscheibe 12 anzupressen. Ein weiterer, auf der gegenüberliegenden Seite der Bremsscheibe 12 angeordneter Reibbelag 28 wird im gezeigten Ausführungsbeispiel von dem Sattel 14, der hier nach dem Schwimmsattelprinzip arbeitet, das Fachleuten auf diesem Gebiet wohlbekannt ist und deshalb hier nicht weiter erläutert wird, bei einem Bremsvorgang an die Bremsscheibe 12 gepreßt.

An dem Reibbelag 26 wirken während eines Bremsvorgangs die in Fig. 2 dargestellten Kräfte. Die Aktuatorkraft $F_A$ verschiebt den einen Keilwinkel $\alpha$ aufweisenden Keil 22 in x-Richtung, wodurch der Reibbelag 26 in Kontakt mit der sich drehenden Bremsscheibe 12 gerät. Sobald der Reibbelag 26 die Bremsscheibe 12 berührt, entsteht eine normal zur Bremsscheibe gerichtete Rückwirk- oder Normalkraft $F_N$ sowie eine in Umfangsrichtung der Bremsscheibe 12 wirkende Reibkraft $F_R$. Diese Kräfte werden zum allergrößten Teil in das Gehäuse der Bremse eingeleitet und dort abgestützt, siehe die Abstützkraft $F_B$. Im gezeigten Beispiel wirkt die Aktuatorkraft $F_A$ parallel zur Bremsscheibenfläche und damit rechtwinklig zur Normalkraft $F_N$.

Während einer Bremsung kann aufgrund eines sich ändernden Reibkoeffizienten $\mu$ zwischen dem Reibbelag 26 und der Bremsscheibe 12 die Selbstverstärkung der Bremse so groß werden, daß zum Aufrechterhalten eines gewünschten Reibmoments die Aktuatorkraft $F_A$ zu Null wird oder sogar negative Werte annehmen muß (auf den Keil 22 wirkt dann keine Druckkraft mehr, sondern eine Zugkraft), um ein "Festgehen", d.h. ein unerwünschtes Blockieren der Bremse zu verhindern.

Zur Reibmomentregelung weist die Scheibenbremse 10 eine nicht weiter dargestellte Einrichtung zur Reibmomentermittlung auf, die gemäß den vorstehenden Ausführungen entweder die Reibkraft $F_R$ und die Normalkraft $F_N$ misst bzw. ermittelt, oder die Aktuatorkraft $F_A$ und die Normalkraft $F_N$ bestimmt. Gemäß den bereits dargelegten Beziehungen kann aus diesen Größen das Reibmoment ermittelt und dann durch entsprechendes Verändern der Aktuatorkraft $F_A$ geregelt werden.

## Patentansprüche

1. Selbstverstärkende elektromechanische Scheibenbremse (10), mit

   - einer drehbaren Bremsscheibe (12),
   - einem eine Betätigungskraft erzeugenden elektrischen Aktuator (16),
   - einem von dem elektrischen Aktuator (16) betätigten Reibbelag (26), auf den der elektrische Aktuator über eine Keilanordnung (24) mit einem Keilwinkel ($\alpha$) wirkt, um den Reibbelag (26) an die Bremsscheibe (12) anzupressen, und
   - einer Einrichtung zur Ermittlung des bei einer Bremsung auftretenden Reibmomentes, die erste Mittel zur Messung der Reibkraft und zweite Mittel zur Bestimmung der zwischen der Bremsscheibe (12) und dem Reibbelag (26) wirkenden Normalkraft umfasst, wobei basierend auf der jeweils bestimmten Normalkraft ein wirkendes Reibmoment ermittelt wird, das jeweils mit dem Ergebnis der Reibkraftmessung verglichen wird, um bei der Ermittlung des Reibmomentes auf Basis der bestimmten Normalkraft Änderungen des Reibkoeffizienten zu berücksichtigen.

2. Scheibenbremse nach Anspruch 1,
   **dadurch gekennzeichnet, dass** die Reibkraft durch einen Sensor gemessen wird, der die bei einer Bremsung auftretende Abstützkraft der Scheibenbremse erfasst.

3. Selbstverstärkende elektromechanische Scheibenbremse (10), mit

   - einer drehbaren Bremsscheibe (12),
   - einem eine Betätigungskraft erzeugenden elektrischen Aktuator (16),
   - einem von dem elektrischen Aktuator (16) betätigten Reibbelag (26), auf den der elektrische Aktuator über eine Keilanordnung (24) mit einem Keilwinkel ($\alpha$) wirkt, um den Reibbelag (26) an die Bremsscheibe (12) anzupressen, und

- einer Einrichtung zur Ermittlung des bei einer Bremsung auftretenden Reibmomentes, die erste Mittel zur Bestimmung der Aktuatorkraft und zweite Mittel zur Bestimmung der zwischen der Bremsscheibe (12) und dem Reibbelag (26) wirkenden Normalkraft umfasst, wobei aus der bestimmten Aktuatorkraft und der bestimmten Normalkraft zunächst ein aktueller Wert für den Reibkoeffizienten errechnet wird, mit dem dann das jeweils aktuelle Reibmoment berechnet wird.

4. Scheibenbremse nach Anspruch 3,
**dadurch gekennzeichnet, dass** die Aktuatorkraft aus Betriebsdaten des Aktuators (16) ermittelt wird, insbesondere aus dem Motorstrom eines dem Aktuator (16) zugehörigen Elektromotors (18) während einer Betätigung der Bremse.

5. Scheibenbremse nach Anspruch 3,
**dadurch gekennzeichnet, dass** die Aktuatorkraft mittels eines im Kraftfluß der Aktuatorkraft angeordneten Kraftsensors gemessen wird.

6. Scheibenbremse nach einem der vorhergehenden Ansprüche,
**dadurch gekennzeichnet, dass** die zwischen der Bremsscheibe (12) und dem Reibbelag (26) wirkende Normalkraft mittels eines im Kraftfluß der Normalkraft angeordneten Kraftsensors gemessen wird.

7. Scheibenbremse nach Anspruch 5 oder 6,
**dadurch gekennzeichnet, dass** der Kraftsensor ein Dehnungsmeßstreifen ist.

8. Scheibenbremse nach einem der Ansprüche 1 bis 5,
**dadurch gekennzeichnet, dass** die zwischen der Bremsscheibe (12) und dem Reibbelag (26) wirkende Normalkraft aus dem Maß der bei einer gegebenen Bremsung erfolgenden Verschiebung eines Keils der Keilanordnung (24) ermittelt wird.

9. Scheibenbremse nach Anspruch 8,
**dadurch gekennzeichnet, dass** das Maß der Keilverschiebung aus Betriebsdaten des Aktuators (16) ermittelt wird, insbesondere aus dem zur Betätigung der Bremse durchlaufenen Drehwinkel eines dem Aktuator (16) zugehörigen Elektromotors (18).

10. Scheibenbremse nach Anspruch 2,
**dadurch gekennzeichnet, dass** das von dem Sensor abgegebene Signal einer Störgrößenfilterung unterzogen wird.

**Claims**

1. Self-energising electromechanical disc brake (10), comprising

 - a rotatable brake disc (12),
 - an electrical actuator (16) which generates an actuation force,
 - a friction lining (26) which is actuated by the electrical actuator (16), and on which the electrical actuator acts via a wedge arrangement (24) with a wedge angle ($\alpha$), to press the friction lining (26) onto the brake disc (12), and
 - a device for determining the moment of friction which occurs during braking, including first means for measuring the frictional force and second means for determining the normal force which acts between the brake disc (12) and the friction lining (26), wherein based on the determined normal force an effective moment of friction is determined, and this moment of friction is compared with the result of measuring the frictional force to take account of changes to the coefficient of friction when the moment of friction is determined on the basis of the determined normal force.

2. Disc brake according to Claim 1,
**characterized in that** the frictional force is measured by a sensor, which captures the supporting force, which occurs during braking, of the disc brake.

3. Self-energising electromechanical disc brake (10), comprising

 - a rotatable brake disc (12),
 - an electrical actuator (16) which generates an actuation force,
 - a friction lining (26) which is actuated by the electrical actuator (16), and on which the electrical actuator acts via a wedge arrangement (24) with a wedge angle ($\alpha$), to press the friction lining (26) onto the brake disc (12), and
 - a device for determining the moment of friction which occurs during braking, including first means for determining the actuator force and second means for determining the normal force which acts between the brake disc (12) and the friction lining (26), wherein from the determined actuator force and determined normal force first a current value for the coefficient of friction is calculated, and using the coefficient of friction the current moment of friction is then calculated,

4. Disc brake according to Claim 3,
**characterized in that** the actuator force is determined from operating data of the actuator (16), particularly from the motor current of an electric motor (18) associated with the actuator (16) while the brake is operated.

**5.** Disc brake according to Claim 3,
**characterized in that** the actuator force is measured by means of a force sensor which is arranged in the force flow of the actuator force.

**6.** Disc brake according to one of the preceding claims,
**characterized in that** the normal force which acts between the brake disc (12) and the friction lining (26) is measured by means of a force sensor which is arranged in the force flow of the normal force.

**7.** Disc brake according to Claim 5 or 6,
**characterized in that** the force sensor is a strain gauge.

**8.** Disc brake according to one of Claims 1 to 5,
**characterized in that** the normal force which acts between the brake disc (12) and the friction lining (26) is determined by measuring the movement, which occurs at a given braking, of a wedge of the wedge arrangement (24).

**9.** Disc brake according to Claim 8,
**characterized in that** the measurement of the wedge movement is determined from operating data of the actuator (16), particularly from the angle of rotation, which is passed through to operate the brake, of an electric motor (18) associated with the actuator (16).

**10.** Disc brake according to Claim 2,
**characterized in that** the signal which the sensor outputs is subjected to disturbance filtering.

**Revendications**

**1.** Frein à disque (10) électromécanique à autoserrage, comportant

- un disque de frein (12) rotatif,
- un actuateur (16) électrique générant une force de commande,
- une garniture de friction (26), qui est actionnée par l'actuateur (16) électrique et sur laquelle agit l'actuateur électrique par l'intermédiaire d'un système de cales (24) avec un angle de cale ($\alpha$), afin de presser la garniture de friction (26) contre le disque de frein (12), et
- un dispositif destiné à déterminer le moment de frottement généré pendant un freinage, lequel comporte des premiers moyens destinés à mesurer la force de friction et des deuxièmes moyens destinés à déterminer la force normale exercée entre le disque de frein (12) et la garniture de friction (26), un moment de frottement actif étant déterminé sur la base de la force normale déterminée dans chaque cas, lequel moment de frottement est comparé au résultat de la mesure de la force de frottement, afin de tenir compte des variations du coefficient de frottement pendant le calcul du moment de frottement basé sur la force normale déterminée.

**2.** Frein à disque selon la revendication 1, **caractérisé en ce que** la force de frottement est mesurée par un capteur, qui enregistre la force d'appui exercée par le frein à disque pendant un freinage.

**3.** Frein à disque (10) électromécanique à autoserrage, comportant

- un disque de frein (12) rotatif,
- un actuateur (16) électrique générant une force de commande,
- une garniture de friction (26), qui est actionnée par l'actuateur (16) électrique et sur laquelle agit l'actuateur électrique par l'intermédiaire d'un système de cales (24) avec un angle de cale ($\alpha$), afin de presser la garniture de friction (26) contre le disque de frein (12), et
- un dispositif destiné à déterminer le moment de frottement généré pendant un freinage, lequel comporte des premiers moyens destinés à mesurer la force de l'actuateur et des deuxièmes moyens destinés à déterminer la force normale exercée entre le disque de frein (12) et la garniture de friction (26), une valeur actuelle pour le coefficient de frottement étant d'abord calculée à partir de la force de l'actuateur déterminée et de la force normale déterminée, puis le moment de frottement respectivement actuel étant calculé avec ladite valeur.

**4.** Frein à disque selon la revendication 3, **caractérisé en ce que** la force de l'actuateur est déterminée à partir des caractéristiques de fonctionnement de l'actuateur (16), en particulier à partir du courant d'un moteur électrique (18) associé à l'actuateur (16) pendant une manoeuvre du frein.

**5.** Frein à disque selon la revendication 3, **caractérisé en ce que** la force de l'actuateur est mesurée au moyen d'un capteur de force agencé dans le flux des forces de l'actuateur.

**6.** Frein à disque selon l'une quelconque des revendications précédentes, **caractérisé en ce que** la force normale exercée entre le disque de frein (12) et la garniture de friction (26) est mesurée au moyen d'un capteur de force agencé dans le flux de la force normale.

7. Frein à disque selon la revendication 5 ou 6, **caractérisé en ce que** le capteur de force est un extensomètre.

8. Frein à disque selon l'une quelconque des revendications 1 à 5, **caractérisé en ce que** la force normale exercée entre le disque de frein (12) et la garniture de friction (26) est déterminée à partir de la valeur du déplacement, résultant d'un freinage donné, d'une cale du système de cales (24).

9. Frein à disque selon la revendication 8, **caractérisé en ce que** la valeur du déplacement de la cale est déterminée à partir de caractéristiques de fonctionnement de l'actuateur (16), en particulier à partir de l'angle de rotation parcouru par un moteur électrique (18), associé à l'actuateur (16), pour manoeuvrer le frein.

10. Frein à disque selon la revendication 2, **caractérisé en ce que** le signal émis par le capteur est soumis à un filtrage des parasites.

Fig. 1

Fig. 2